Europäisches Patentamt

European Patent Office

Office européen des brevets

(19)

(11) Numéro de publication: **0 319 360 B1**

# (12) FASCICULE DE BREVET EUROPEEN

(45) Date de publication de fascicule du brevet: **20.01.93** (51) Int. Cl.5: **A23D 9/00**

(21) Numéro de dépôt: **88402857.2**

(22) Date de dépôt: **15.11.88**

(54) **Nouvelle huile diététique.**

(30) Priorité: **30.11.87 FR 8716555**

(43) Date de publication de la demande:
**07.06.89 Bulletin 89/23**

(45) Mention de la délivrance du brevet:
**20.01.93 Bulletin 93/03**

(84) Etats contractants désignés:
**AT BE CH DE ES GB GR IT LI LU NL SE**

(56) Documents cités:
**FR-A- 2 097 036**
**GB-A- 2 148 713**

**CHEMICAL ABSTRACTS, vol. 84, 1976, page 467, résumé no. 104228f, Columbus, Ohio, US; P.O. ASTORG et al.: "Very short-term comparative effects of docosenoic acid-rich oils on rat cardiac lipids. Rape oil and partially hydrogenated herring oils"**

**Handbuch des Lebensmittelschemie, Bd IV, Fette und Lipoide, Springer Verlag, 1969, p. 10 Tab. I**

(73) Titulaire: **Vernin, Jean-Gilles**
**55, Rue Jouffroy**
**F-75017 Paris(FR)**

(72) Inventeur: **Vernin, Jean-Gilles**
**55, Rue Jouffroy**
**F-75017 Paris(FR)**

(74) Mandataire: **Ores, Irène et al**
**CABINET ORES 6, Avenue de Messine**
**F-75008 Paris(FR)**

**Description**

La présente invention est relative à une nouvelle huile diététique dont la composition en acides gras est telle qu'elle est apte à contribuer de façon efficace à la prévention des maladies cardiovasculaires.

Il existe dans le commerce des huiles diététiques telles que l'huile de paraffine ; toutefois, l'huile de paraffine, en plus de son action sur la constipation, est indiquée pour des régimes hypocalorifiques et n'a pas d'effet préventif sur les maladies cardiovasculaires. Il existe également des huiles diététiques présentées sous forme de gélules ou de capsules molles contenant des extraits concentrés d'huile de poisson. La Demande de Brevet Français 2 097 036 au nom des Laboratoires SOPHARGA décrit par exemple des lipides essentiellement destinés à être administrés de la sorte, et constitués d'un mélange de matière grasse anhydre de beurre, source d'acides gras à chaîne courte, et d'huile végétale ou bien d'huile de poisson, source d'acides gras essentiels. Toutefois, ces gélules ou analogues sont perçues par les consommateurs comme des quasimédicaments, dont la prise est mal acceptée à la longue et est abandonnée à plus ou moins bref délai.

Or, il est de fait que les huiles de poisson présentent des avantages importants qui militent en faveur de leur adoption en tant qu'huiles de consommation : en effet, des études épidémiologiques ont mis en évidence la faible proportion d'infarctus du myocarde dans des populations qui consomment des quantités importantes d'animaux aquatiques ; les poissons contiennent en effet une proportion importante d'acides gras polyinsaturés et, en particulier, ceux de la série n-3 :

l'acide éicosapentaénoïque (C 20 : 5)

l'acide docosahexaénoïque (C 22 : 6)

l'acide alpha linolénique (C 18 : 3)

dont la consommation régulière favoriserait une réduction des triglycérides circulants, par diminution partielle de la synthèse hépatique des V.L.D.L. (Very Low Density lipo-protéins), qui aurait pour conséquence de diminuer le risque vasculaire dans les populations concernées.

Cependant pour pourvoir à une huile diététique de consommation courante, il n'est pas suffisant qu'elle soit constituée exclusivement d'huile de poisson : il faut, en effet, qu'une huile de consommation courante ait une bonne tenue en cuisson et puisse être utilisée pour réaliser des fritures plates et/ou profondes ; il faut aussi qu'elle ait un goût bien accepté par les consommateurs.

La Demande de Brevet Européen 304 115 au nom d'UNILEVER, qui appartient à l'état de la technique visé à l'article 54, paragraphe 3 de la CBE, expose les problèmes posés par l'utilisation de l'huile de poisson comme huile de consommation courante : la proportion importante d'acide gras très insaturés à la longue chaîne contenue dans ces huiles rend celles-ci très sensibles à l'oxydation, ce qui leur confère une odeur et une saveur "de poisson", les rendant impropres à la consommation courante.

Pour remédier à ces inconvénients, la Demande de Brevet Européen 304 115 propose :

1) de raffiner l'huile de poisson ;

2) de mélanger l'huile de poisson raffinée avec une huile végétale, en spécifiant bien toutefois que, pour être efficace, ce mélange doit être effectué pendant, ou immédiatement après le raffinage.

Il faut encore, pour qu'une huile de consommation courante présente des propriétés diététiques favorables sur le plan cardiovasculaire, cliniquement décelables :

- que sa teneur en acides gras saturés soit la plus faible possible ;

- que sa teneur en acides gras insaturés soit la plus importante possible, avec une répartition aussi voisine que possible de 50/50 en mono- et en polyinsaturés ;

- qu'elle contienne les deux acides gras essentiels suivants :

. acide linoléique (C 18 ; 2 6 )

. acide linolénique (C 18 ; 3 3)

et que ces deux acides gras essentiels soient présents dans un rapport de 3/1 à 8/1 dans l'huile.

La présente Invention a, en conséquence, pour but de pourvoir à une huile diététique apte à contribuer à la prévention des maladies cardiovasculaires, qui satisfasse aux critères énoncés plus haut.

La présente Invention a pour objet une huile diététique, caractérisée en ce que sa composition pondérale % en acides gras, à ± 15 % près, est la suivante :

| Composition en Acides Gras | | % en poids ± 15% |
|---|---|---|
| **ACIDES SATURES** | | |
| laurique | C 12 : 0 | 0 - 0,3 |
| myristique | C 14 : 0 | 0,4 - 1,1 |
| palmitique | C 16 : 0 | 6,0 - 7,9 |
| stéarique | C 18 : 0 | 1,4 - 3,1 |
| arachidique | C 20 : 0 | 0 - 0,8 |
| béhénique | C 22 : 0 | 0 - 0,6 |
| **ACIDES MONOINSATURES** | | |
| palmitoléique | C 16 : 1 | 0 - 1,1 |
| oléique | C 18 : 1 | 27,5 - 34,6 |
| écosénoïque | C 20 : 1 | 1,1 - 2,6 |
| érucique | C 22 : 1 | 0,5 - 2,2 |
| **ACIDE POLYINSATURES** | | |
| linoléique | C 18 : 2 | 44,7 - 51,4 |
| linolénique | C 18 : 3 | 3,2 - 4,8 |
| eicosapentaénoïque | C 20 : 5 | 0,8 - 1,4 |
| docosahexaénoïque | C 22 : 6 | 0,5 - 1,1 |
| n-6 Total | | 51,4 |
| n3 Total | | 6,44 |
| $\triangle \dfrac{n6}{n3}$ | | 8,0 |

Selon un mode de réalisation avantageux de l'huile diététique conforme à la présente Invention, l'acide linoléique qui rentre dans sa composition est apporté par une huile végétale choisie dans le groupe qui comprend notamment l'huile de tournesol, l'huile de pépins de raisin, l'huile de noix, l'huile de maïs.

Selon un autre mode de réalisation avantageux de l'huile diététique conforme à la présente Invention, l'acide linolénique qui rentre dans sa composition est apporté par une huile végétale choisie dans le groupe qui comprend notamment l'huile de colza et l'huile de soja.

Selon encore un autre mode de réalisation avantageux de l'huile diététique conforme à la présente Invention, les acides gras polyinsaturés de la série n-3 et notamment l'acide eicosapentaénoïque et l'acide docosahexaénoïque qui rentrent dans sa composition sont apportés par une huile de poisson choisie dans le groupe qui comprend des huiles de poissons à faible teneur en acides gras saturés et à faible teneur en acides gras polyinsaturés de la série n-6.

Selon une disposition avantageuse de ce mode de réalisation, l'huile de poisson est choisie dans le groupe qui comprend notamment l'huile de capelan, l'huile de sardine, l'huide d'anchois, l'huile de mendahen, l'huile de maquereau, l'huile de hareng.

Selon un mode de réalisation avantageux de l'huile diététique conforme à la présente Invention, les propositions respectives d'huile végétale assurant l'apport d'acide linoléique, d'huile végétale assurant l'apport d'acide alpha-linolénique et d'huile de poisson assurant l'apport d'acides gras polyinsaturés de la série n-3, entrant dans la composition de ladite huile sont de l'ordre de 52 à 57% en poids pour la première, de 28 à 33% en poids pour la seconde et de 10 à 15% en poids pour la troisième.

La présente invention a également pour objet un procédé de préparation de l'huile diététique conforme à la présente Invention, qui consiste à mélanger dans des proportions appropriées telles que définies plus haut, les huiles végétales et l'huile de poisson qui sont les composants de l'huile diététique que l'on vise à préparer, préalablement raffinées et désodorisées.

Les propriétés de l'huile diététique conforme à la présente invention, propres à déterminer et à confirmer son aptitude à la consommation, ont été testées. Il s'agit des propriétés suivantes :

- stabilité à l'oxydation (par le test AOCM de stabilité des graisses) (AOCM = American Oil Chemists' Society) ;
- comportement à la friture à 120°C (friture plate),
- comportement à la friture à 180°C (friture profonde),
- indice d'acidité,
- taux de peroxyde,
- couleur,
- goût,
- composition en acides gras.

L'huile diététique soumise aux tests présentait la composition suivante, donnée à titre d'exemple non-limitatif :

| | |
|---|---|
| - Huile de tournesol | 55 % |
| - Huile de colza | 31 % |
| - Huile de capelan | 14 % |

et la composition en acides gras suivante :

| ACIDES SATURES | | |
|---|---|---|
| laurique | C 12 : 0 | 0 |
| myristique | C 14 : 0 | 0,8 |
| palmitique | C 16 : 0 | 6,7 |
| stéarique | C 18 : 0 | 3,1 |
| arachidique | C 20 : 0 | 0,5 |
| béhénique | C 22 : 0 | 0,6 |

| ACIDES MONOINSATURES | | |
|---|---|---|
| palmitoléique | C 16 : 1 | 1,1 |
| oléique | C 18 : 1 | 30,7 |
| éicosénoïque | C 20 : 1 | 2,6 |
| érucique | C 22 : 1 | 2,2 |

| ACIDES POLYINSATURES | | |
|---|---|---|
| linoléique | C 18 : 2 | 44,9 |
| linolénique | C 18 : 3 | 3,2 |
| écosapentaénoïque | C 20 : 5 | 0,8 |
| docosahexaénoïque | C 22 : 6 | 1,1 |

Dans les conditions des tests :

1) La stabilité de l'huile diététique, qui se traduit par la comparaison de sa composition en acides gras avant le commencement du test et au bout de 4 heures de chauffage à 100°C avec barbotage d'air à débit constant, et de son taux de peroxydes, n'a pas fait apparaître de variations significatives.

2) Le test de friture à 120°C : l'huile diététique n'a pas subi d'augmentation significative de l'indice d'acidité (0,11 --> 0,14) et elle n'a pas moussé pendant la friture. Sa composition en acides gras ne s'est

4

pas modifiée de façon significative pendant la friture ; son taux de peroxyde a légèrement augmenté : 7,4 --> 10,5 ; la couleur je l'huile frite n'a augmenté que d'un facteur 2,5 (pendant que la couleur de l'huile de tournesol frite augmentait d'un facteur 4 et que celle de l'huile de colza frite augmentait d'un facteur 3,5).

3) Le test de friture a 180 C :
- l'indice d'acidité est passé de 0,11 à 0,23 ;
- la couleur de l'huile frite s'est assombrie d'un facteur 7 ;
- le taux de peroxyde est passé de 7,4 à 16,2 ;
- la composition en acides gras ne s'est pas modifiée de façon significative.

Le goût de l'huile diététique conforme a l'invention ne s'est pas modifié de façon significative ni après friture à 120°C, ni après friture à 180°C.

**Revendications**

**Revendications pour les Etats contractants suivants : AT, BE, CH, DE, GB, IT, LI, LU, NL, SE**

1. Huile diététique, caractérisée en ce que sa composition pondérale % en acides gras, à ± 15 % près, est la suivante :

| Composition en Acides Gras | | % en poids ± 15% |
|---|---|---|
| **ACIDES SATURES** | | |
| laurique | C 12 : 0 | 0 - 0,3 |
| myristique | C 14 : 0 | 0,4 - 1,1 |
| palmitique | C 16 : 0 | 6,0 - 7,9 |
| stéarique | C 18 : 0 | 1,4 - 3,1 |
| arachidique | C 20 : 0 | 0 - 0,8 |
| béhénique | C 22 : 0 | 0 - 0,6 |
| **ACIDES MONOINSATURES** | | |
| palmitoléique | C 16 : 1 | 0 - 1,1 |
| oléique | C 18 : 1 | 27,5 - 34,6 |
| écosénoïque | C 20 : 1 | 1,1 - 2,6 |
| érucique | C 22 : 1 | 0,5 - 2,2 |
| **ACIDE POLYINSATURES** | | |
| linoléique | C 18 : 2 | 44,7 - 51,4 |
| linolénique | C 18 : 3 | 3,2 - 4,8 |
| eicosapentaénoïque | C 20 : 5 | 0,8 - 1,4 |
| docosahexaénoïque | C 22 : 6 | 0,5 - 1,1 |

2. Huile diététique selon la Revendication 1, caractérisée en ce que l'acide linoléique qui entre dans sa composition est apporté essentiellement par une huile végétale choisie dans le groupe qui comprend l'huile de tournesol, l'huile de pépins de raisin, l'huile de noix, l'huile de maïs.

3. Huile diététique selon l'une quelconque des Revendications 1 ou 2, caractérisée en ce que l'acide linolénique qui entre dans sa composition est apporté essentiellement par une huile végétale choisie dans le groupe qui comprend l'huile de colza et l'huile de soja.

4. Huile diététique selon l'une quelconque des Revendications 1 à 3, caractérisée en ce que les acides gras polyinsaturés de la série n-3 et notamment l'acide eicosapentaénoïque et l'acide docosahexaénoïque qui entrent dans sa composition, sont apportées par une huile de poissons.

5. Huile diététique selon la Revendication 4, caractérisée en ce que l'huile de poisson est choisie dans le groupe qui comprend notamment l'huile de capelan, l'huile de sardine, l'huile d'anchois, l'huile de mendahen, l'huile de maquereau, l'huile de hareng.

6. Huile diététique selon l'une quelconque des Revendications 1 à 5, caractérisée en ce que les proportions respectives d'huile végétale assurant l'apport d'acide linoléique, d'huile végétale assurant l'apport d'acide alpha-linolénique et d'huile de poisson assurant l'apport d'acides gras polyinsaturés de la série n-3 qui rentrent dans sa composition sont de l'ordre de 52 à 57% en poids pour la première, de 28 à 33 % en poids pour la seconde et de 10 à 15% en poids pour la troisième.

7. Procédé de préparation d'une huile diététique selon l'une quelconque des Revendications 1 à 6, caractérisé en ce que les huiles végétales et l'huile de poisson qui sont les composants de l'huile diététique que l'on vise à préparer, préalablement raffinées et désodorisées, sont mélangées dans des proportions appropriées.

8. Procédé selon la Revendication 7, caractérisé en ce que l'huile végétale assurant l'apport d'acide linoléique est choisie dans le groupe qui comprend notamment l'huile de tournesol, l'huile de pépins de raisin, l'huile de noix, l'huile de maïs.

9. Procédé selon l'une quelconque des Revendications 7 ou 8, caractérisé en ce que l'huile végétale assurant l'apport d'acide linolénique est choisie dans le groupe qui comprend notamment l'huile de colza et l'huile de soja.

10. Procédé selon l'une quelconque des Revendications 7 à 9, caractérisé en ce que l'huile de poisson apte à apporter des acides gras polyinsaturés de la série n-3 et notamment l'acide écosapentaénoïque et l'acide docosahexaénoïque, est choisie dans le groupe qui comprend des huiles de poissons à faible teneur en acide gras saturés et à faible teneur en acides gras polyinsaturés de la série n-6.

**Revendications pour les Etats contractants suivants : ES, GR,**

1. Procédé de préparation d'une huile diététique, caractérisé en ce que l'on mélange des acides gras dans les proportions suivantes, à ± 15 % près :

| Composition en Acides Gras | | % en poids ± 15% |
|---|---|---|
| **ACIDES SATURES** | | |
| laurique | C 12 : 0 | 0 - 0,3 |
| myristique | C 14 : 0 | 0,4 - 1,1 |
| palmitique | C 16 : 0 | 6,0 - 7,9 |
| stéarique | C 18 : 0 | 1,4 - 3,1 |
| arachidique | C 20 : 0 | 0 - 0,8 |
| béhénique | C 22 : 0 | 0 - 0,6 |
| **ACIDES MONOINSATURES** | | |
| palmitoléique | C 16 : 1 | 0 - 1,1 |
| oléique | C 18 : 1 | 27,5 - 34,6 |
| écosénoïque | C 20 : 1 | 1,1 - 2,6 |
| érucique | C 22 : 1 | 0,5 - 2,2 |
| **ACIDE POLYINSATURES** | | |
| linoléique | C 18 : 2 | 44,7 - 51,4 |
| linolénique | C 18 : 3 | 3,2 - 4,8 |
| eicosapentaénoïque | C 20 : 5 | 0,8 - 1,4 |
| docosahexaénoïque | C 22 : 6 | 0,5 - 1,1 |

2. Procédé de préparation d'une huile diététique, selon la Revendication 1, caractérisé en ce que l'acide linoléique est apporté essentiellement par une huile végétale choisie dans le groupe qui comprend l'huile de tournesol, l'huile de pépins de raisin, l'huile de noix, l'huile de maïs.

3. Procédé de préparation d'une huile diététique, selon l'une quelconque des Revendications 1 ou 2, caractérisé en ce que l'acide linolénique est apporté essentiellement par une huile végétale choisie dans le groupe qui comprend l'huile de colza et l'huile de soja.

4. Procédé de préparation d'une huile diététique, selon l'une quelconque des Revendications 1 à 3, caractérisé en ce que les acides gras polyinsaturés de la série n-3 et notamment l'acide eicosapentaénoïque et l'acide docosahexaénoïque, sont apportées par une huile de poissons.

5. Procédé de préparation d'une huile diététique, selon la Revendication 4, caractérisé en ce que l'huile de poisson est choisie dans le groupe qui comprend notamment l'huile de capelan, l'huile de sardine, l'huile d'anchois, l'huile de mendahen, l'huile de maquereau, l'huile de hareng.

6. Procécé selon l'une quelconque des Revendications 1 à 5, caractérisé en ce que les proportions respectives d'huile végétale assurant l'apport d'acide linoléique, d'huile végétale assurant l'apport d'acide alpha-linolénique et d'huile de poisson assurant l'apport d'acides gras polyinsaturés de la série n-3 qui rentrent dans la composition de l'huile diététique sont de l'ordre de 52 à 57% en poids pour la première, de 28 à 33 % en poids pour la seconde et de 10 à 15% en poids pour la troisième.

7. Procédé de préparation d'une huile diététique, selon l'une quelconque des Revendications 1 à 6, caractérisé en ce que les huiles végétales et l'huile de poisson qui sont les composants de l'huile diététique que l'on vise à préparer, sont préalablement raffinées et désodorisées.

**Claims**

7

**Claims for the following Contracting States : AT, BE, CH, DE, GB, IT, LI, LU, NL, SE**

1.  Dietary oil, characterised in that its fatty acid composition in weight %, to within ± 15%, is as follows:

| Fatty acid composition | | | weight % ± 15% |
|---|---|---|---|
| **SATURATED ACIDS** | | | |
| lauric | C 12 : 0 | | 0 - 0.3 |
| myristic | C 14 : 0 | | 0.4 - 1.1 |
| palmitic | C 16 : 0 | | 6.0 - 7.9 |
| stearic | C 18 : 0 | | 1.4 - 3.1 |
| arachidic | C 20 : 0 | | 0 - 0.8 |
| behenic | C 22 : 0 | | 0 - 0.6 |
| **MONOUNSATURATED ACIDS** | | | |
| palmitoleic | C 16 : 1 | | 0 - 1.1 |
| oleic | C 18 : 1 | | 27.5 -34.6 |
| eicosenoic | C 20 : 1 | | 1.1 - 2.6 |
| erucic | C 22 : 1 | | 0.5 - 2.2 |
| **POLYUNSATURATED ACIDS** | | | |
| linoleic | C 18 : 2 | | 44.7 -51.4 |
| linolenic | C 18 : 3 | | 3.2 - 4.8 |
| eicosapentaenoic | C 20 : 5 | | 0.8 - 1.4 |
| docosahexaenoic | C 22 : 6 | | 0.5 - 1.1 |

2.  Dietary oil according to Claim 1, characterised in that the linoleic acid used in a composition thereof is essentially supplied by a vegetable oil chosen from the group comprising sunflower oil, grapeseed oil, nut oil and maize oil.

3.  Dietary oil according to either of Claims 1 and 2, characterised in that the linolenic acid used in a composition thereof is essentially supplied by a vegetable oil chosen from the group comprising colza oil and soya bean oil.

4.  Dietary oil according to any one of Claims 1 to 3, characterised in that the polyunsaturated fatty acids of the n-3 series, especially eicosapentaenoic acid and docosahexaenoic acid, which are used in a composition thereof are supplied by a fish oil.

5.  Dietary oil according to Claim 4, characterised in that the fish oil is chosen from the group comprising, in particular, capelin oil, sardine oil, anchovy oil, menhaden oil, mackerel oil and herring oil.

6.  Dietary oil according to any one of Claims 1 to 5, characterised in that the respective proportions of vegetable oil providing the supply of linoleic acid, of vegetable oil providing the supply of alpha-linolenic acid and of fish oil providing the supply of polyunsaturated fatty acids of the n-3 series which are used in a composition thereof are of the order of 52 to 57% by weight for the first, 28 to 33% by weight for the second and 10 to 15% by weight for the third.

7.  Process for preparing a dietary oil according to any one of Claims 1 to 6, characterised in that the vegetable oils and the fish oil, which are the components of the dietary oil which it is desired to prepare, refined and deodorised beforehand, are mixed in suitable proportions.

8

**8.** Process according to Claim 7, characterised in that the vegetable oil providing the supply of linoleic acid is chosen from the group comprising, in particular, sunflower oil, grapeseed oil, nut oil and maize oil.

**9.** Process according to either of Claims 7 and 8, characterised in that the vegetable oil providing the supply of linolenic acid is chosen from the group comprising, in particular, colza oil and soya bean oil.

**10.** Process according to any one of Claims 7 to 9, characterised in that the fish oil capable of supplying polyunsaturated fatty acids of the n-3 series, especially eicosapentaenoic acid and docosahexaenoic acid, is chosen from the group comprising fish oils with a low content of saturated fatty acids and a low content of polyunsaturated fatty acids of the n-6 series.

**Claims for the following Contracting States : ES, GR**

**1.** Method for preparing a dietary oil, characterised in that fatty acids are mixed in the following proportions, to within ± 15%:

| Fatty acid composition | | weight % ± 15% |
|---|---|---|
| SATURATED ACIDS | | |
| lauric | C 12 : 0 | 0 – 0.3 |
| myristic | C 14 : 0 | 0.4 – 1.1 |
| palmitic | C 16 : 0 | 6.0 – 7.9 |
| stearic | C 18 : 0 | 1.4 – 3.1 |
| arachidic | C 20 : 0 | 0 – 0.8 |
| behenic | C 22 : 0 | 0 – 0.6 |
| MONOUNSATURATED ACIDS | | |
| palmitoleic | C 16 : 1 | 0 – 1.1 |
| oleic | C 18 : 1 | 27.5 – 34.6 |
| eicosenoic | C 20 : 1 | 1.1 – 2.6 |
| erucic | C 22 : 1 | 0.5 – 2.2 |
| POLYUNSATURATED ACIDS | | |
| linoleic | C 18 : 2 | 44.7 – 51.4 |
| linolenic | C 18 : 3 | 3.2 – 4.8 |
| eicosapentaenoic | C 20 : 5 | 0.8 – 1.4 |
| docosahexaenoic | C 22 : 6 | 0.5 – 1.1 |

**2.** Process for preparing a dietary oil, according to Claim 1, characterized in that the linoleic acid is essentially supplied by a vegetable oil chosen from the group comprising sunflower oil, grapeseed oil, nut oil and maize oil.

**3.** Process for preparing a dietary oil, according to either of Claims 1 and 2, characterized in that the linolenic acid is essentially supplied by a vegetable oil chosen from the group comprising colza oil and soya bean oil.

**4.** Process for preparing a dietary oil, according to any one of Claims 1 to 3, characterized in that the polyunsaturated fatty acids of the n-3 series, especially eicosapentaenoic acid and docosahexaenoic acid, are supplied by a fish oil.

5. Process for preparing a dietary oil, according to Claim 4, characterised in that the fish oil is chosen from the group comprising, in particular, capelin oil, sardine oil, anchovy oil, menhaden oil, mackerel oil and herring oil.

6. Process according to any one of Claims 1 to 5, characterised in that the respective proportions of vegetable oil providing the supply of linoleic acid, of vegetable oil providing the supply of alpha-linolenic acid and of fish oil providing the supply of polyunsaturated fatty acids of the n-3 series which are used in the composition of the dietary oil, are of the order of 52 to 57% by weight for the first, 28 to 33% by weight for the second and 10 to 15% by weight for the third.

7. Process for preparing a dietary oil, according to any one of Claims 1 to 6, characterised in that the vegetable oils and the fish oil, which are the components of the dietary oil which it is desired to prepare, are refined and deodorised beforehand.

**Patentansprüche**
**Patentansprüche für folgende Vertragsstaaten : AT, BE, CH, DE, GB, IT, LI, LU, NL, SE**

1. Diätetisches Öl, dadurch **gekennzeichnet,** daß dessen prozentuale Gewichtszusammensetzung an Fettsäuren, etwa ± 15 %, wie folgt ist:

| Fettsäurezusammensetzung | | | Gew.-% ± 15% | | |
|---|---|---|---|---|---|
| **Gesättigte Säuren** | | | | | |
| Laurin- | C 12 : 0 | | 0 | – | 0,3 |
| Myristin- | C 14 : 0 | | 0,4 | – | 1,1 |
| Palmitin- | C 16 : 0 | | 6,0 | – | 7,9 |
| Stearin- | C 18 : 0. | | 1,4 | – | 3,1 |
| Arachidin- | C 20 : 0 | | 0 | – | 0,8 |
| Behen- | C 22 : 0 | | 0 | – | 0,6 |
| **Einfach ungesättigte Säuren** | | | | | |
| Palmitolein- | C 16 : 1 | | 0 | – | 1,1 |
| Öl- | C 18 : 1 | | 27,5 | – | 34,6 |
| Ecosen- | C 20 : 1 | | 1,1 | – | 2,6 |
| Eruca- | C 22 : 1 | | 0,5 | – | 2,2 |
| **Mehrfach ungesättigte Säuren** | | | | | |
| Linol- | C 18 : 2 | | 44,7 | – | 51,4 |
| Linolen- | C 18 : 3 | | 3,2 | – | 4,8 |
| Eicosapentaen- | C 20 : 5 | | 0,8 | – | 1,4 |
| Docosahexaen- | C 22 : 6 | | 0,5 | – | 1,1 |

2. Diätetisches Öl nach Anspruch 1, dadurch **gekennzeichnet,** daß die Linolsäure, die in der Zusammensetzung vorhanden ist, im wesentlichen aus einem pflanzlichen Öl, ausgewählt aus der Gruppe, umfassend Sonnenblumenöl, Traubenkernöl, Nußöl, Maisöl, stammt.

**3.** Diätetisches Öl nach einem der Ansprüche 1 oder 2, dadurch **gekennzeichnet,** daß die Linolensäure, die in der Zusammensetzung vorhanden ist, im wesentlichen aus einem pflanzlichen Öl, ausgewählt aus der Gruppe, umfassend Rüböl und Sojaöl, stammt.

**4.** Diätetisches Öl nach einem der Ansprüche 1 bis 3, dadurch **gekennzeichnet,** daß die mehrfach ungesättigten Fettsäuren der Reihe n-3 und insbesondere die Eicosapentaensäure und Docosahexaensäure, die in der Zusammensetzung vorhanden sind, aus einem Fischöl stammen.

**5.** Diätetisches Öl nach Anspruch 4, dadurch **gekennzeichnet,** daß das Fischöl aus der Gruppe, umfassend insbesondere Dorschöl, Sardinenöl, Anchovisöl, Menhadenöl, Makrelenöl, Heringöl, ausgewählt ist.

**6.** Diätetisches Öl nach einem der Ansprüche 1 bis 5, dadurch **gekennzeichnet,** daß die jeweiligen Anteile an Pflanzenöl, das den Beitrag an Linolsäure liefert, an Pflanzenöl, das den Beitrag an $\alpha$-Linolensäure liefert, und an Fischöl, das den Beitrag an mehrfach ungesättigten Fettsäuren der Reihe n-3 liefert, in der Zusammensetzung in der Größenordnung von 52 bis 57 Gew.-% für das zuerst genannte, 28 bis 33 Gew.-% für das nächstgenannte und 10 bis 15 Gew.-% für das als drittes genannte liegen.

**7.** Verfahren zur Herstellung eines diätetischen Öls nach einem der Ansprüche 1 bis 6, dadurch **gekennzeichnet,** daß die pflanzlichen Öle und die Fischöle, die die Bestandteile des diätetischen Öls, das herzustellen ist, sind, zuvor raffiniert und desodorisiert werden und dann in den geeigneten Anteilen vermischt werden.

**8.** Verfahren nach Anspruch 7, dadurch **gekennzeichnet,** daß das pflanzliche Öl, das den Beitrag an Linolsäure liefert, aus der Gruppe, umfassend insbesondere Sonnenblumenöl, Traubenkernöl, Nußöl, Maisöl, ausgewählt wird.

**9.** Verfahren nach einem der Ansprüche 7 oder 8, dadurch **gekennzeichnet,** daß das pflanzliche Öl, das den Beitrag an Linolensäure liefert, aus der Gruppe, umfassend insbesondere Rüböl und Sojaöl, ausgewählt wird.

**10.** Verfahren nach einem der Ansprüche 7 bis 9, dadurch **gekennzeichnet,** daß das Fischöl, das geeignet ist, mehrfach ungesättigte Fettsäuren der Reihe n-3 und insbesondere Eicosapentaensäure und Docosahexaensäure zu liefern, aus der Gruppe, umfassend Fischöle mit einem geringen Gehalt an gesättigten Fettsäuren und einem geringen Gehalt an mehrfach ungesättigten Fettsäuren der Reihe n-6, ausgewählt wird.

**Patentansprüche für folgende Vertragsstaaten : ES, GR**

**1.** Verfahren zur Herstellung eines diätetischen Öls, dadurch **gekennzeichnet,** daß man Fettsäuren in den folgenden Anteilen, etwa ± 15 %, vermischt:

Fettsäurezusammensetzung Gew.-% ± 15%

**Gesättigte Säuren**

| | | |
|---|---|---|
| Laurin- | C 12 : 0 | 0 – 0,3 |
| Myristin- | C 14 : 0 | 0,4 – 1,1 |
| Palmitin- | C 16 : 0 | 6,0 – 7,9 |
| Stearin- | C 18 : 0 | 1,4 – 3,1 |
| Arachidin- | C 20 : 0 | 0 – 0,8 |
| Behen- | C 22 : 0 | 0 – 0,6 |

**Einfach ungesättigte Säuren**

| | | |
|---|---|---|
| Palmitolein- | C 16 : 1 | 0 – 1,1 |
| Öl- | C 18 : 1 | 27,5 – 34,6 |
| Ecosen- | C 20 : 1 | 1,1 – 2,6 |
| Eruca- | C 22 : 1 | 0,5 – 2,2 |

**Mehrfach ungesättigte Säuren**

| | | |
|---|---|---|
| Linol- | C 18 : 2 | 44,7 – 51,4 |
| Linolen- | C 18 : 3 | 3,2 – 4,8 |
| Eicosapentaen- | C 20 : 5 | 0,8 – 1,4 |
| Docosahexaen- | C 22 : 6 | 0,5 – 1,1 |

2. Verfahren zur Herstellung eines diätetischen Öls nach Anspruch 1, dadurch **gekennzeichnet,** daß die Linolsäure im wesentlichen aus einem pflanzlichen Öl, ausgewählt aus der Gruppe, umfassend Sonnenblumenöl, Traubenkernöl, Nußöl, Maisöl, stammt.

3. Verfahren zur Herstellung eines diätetischen Öls nach einem der Ansprüche 1 oder 2, dadurch **gekennzeichnet,** daß die Linolensäure im wesentlichen aus einem pflanzlichen Öl, ausgewählt aus der Gruppe, umfassend Rüböl und Sojaöl, stammt.

4. Verfahren zur Herstellung eines diätetischen Öls nach einem der Ansprüche 1 bis 3, dadurch **gekennzeichnet,** daß die mehrfach ungesättigten Fettsäuren der Reihe n-3 und insbesondere die Eicosapentaensäure und die Docosahexaensäure aus einem Fischöl stammen.

5. Verfahren zur Herstellung eines diätetischen Öls nach Anspruch 4, dadurch **gekennzeichnet,** daß das Fischöl aus der Gruppe, umfassend insbesondere Dorschöl, Sardinenöl, Anchovisöl, Menhadenöl, Makrelenöl, Heringöl, ausgewählt wird.

6. Verfahren nach einem der Ansprüche 1 bis 5, dadurch **gekennzeichnet,** daß die jeweiligen Anteile des pflanzlichen Öls, das die Linolsäure liefert, des pflanzlichen Öls, das die $\alpha$-Linolensäure liefert, und des Fischöls, das die mehrfach ungesättigten Fettsäuren der Reihe n-3 liefert, die in der Zusammensetzung des diätetischen Öls vorhanden sind, in der Größenordnung von 52 bis 57 Gew.-% für das zuerst genannte, 28 bis 33 Gew.-% für das zweitgenannte und 10 bis 15 Gew.-% für das drittgenannte vorliegen.

**7.** Verfahren zur Herstellung eines diätetischen Öls nach einem der Ansprüche 1 bis 6, dadurch **gekennzeichnet,** daß die pflanzlichen Öle und das Fischöl, die die Bestandteile des herzustellenden diätetischen Öls sind, zuvor raffiniert und desodorisiert werden.